# EUROPEAN PATENT SPECIFICATION

(11) **EP 4 528 838 B1**
(45) Date of publication and mention of the grant of the patent: **11.11.2026**
(21) Application number: 22942555.8
(22) Date of filing: 19.05.2022
(51) Int. Cl.: H01M 4/13, H01M 4/62, H01M 10/0562

(54) **SECONDARY BATTERY**
SEKUNDÄRBATTERIE
BATTERIE SECONDAIRE

(43) Date of publication of application: 26.03.2025
(73) Proprietor: NISSAN MOTOR CO., LTD., Kanagawa 221-0023 (JP); Renault s.a.s, 92100 Boulogne Billancourt (FR)
(72) Inventor: TAKADA, Harumi, Atsugi-shi, Kanagawa 243-0123 (JP); SHIBAMURA, Ryuji, Atsugi-shi, Kanagawa 243-0123 (JP)
(74) Representative: Grünecker Patent- und Rechtsanwälte PartG mbB
(86) International application number: PCT/IB2022/000286
(87) International publication number: WO 2023/223065

(56) References cited:
- CN-A- 112 993 382
- JP-A- 2010 262 764
- JP-A- 2010 262 764
- JP-A- 2018 142 406
- JP-A- 2020 038 784
- JP-A- 2020 098 696
- JP-A- 2020 123 538
- JP-A- 2020 126 794

## Description

### TECHNICAL FIELD

The present invention relates to a secondary battery.

### BACKGROUND ART

In recent years, in order to cope with global warming, reduction of carbon dioxide emissions has been strongly desired. In the automobile industry, expectations have been focused on reduction of carbon dioxide emissions by introduction of electric vehicles (EVs) and hybrid electric vehicles (HEVs), and development of non-aqueous electrolyte secondary batteries such as secondary batteries for motor drive, which are the key to practical application of these, has been actively conducted.

As the secondary battery for motor drive, it has been required to have extremely high output characteristics and high energy as compared with a lithium secondary battery for consumer use used in a mobile phone, a notebook computer, and the like. Therefore, a lithium secondary battery having the highest theoretical energy among all practical batteries has attracted attention, and is currently being rapidly developed.

Here, a lithium secondary battery that is currently widely used uses a combustible organic electrolyte solution as an electrolyte. In such a liquid lithium secondary battery, safety measures against liquid leakage, short circuit, overcharge, and the like are more strictly required than other batteries.

Therefore, in recent years, research and development on an all-solid-state lithium secondary battery using an oxide-based or sulfide-based solid electrolyte as an electrolyte have been actively conducted. The solid electrolyte is a material mainly composed of an ion conductor capable of ion conduction in a solid. Therefore, in the all-solid-state lithium secondary battery, various problems caused by a combustible organic electrolyte solution do not occur in principle unlike a conventional liquid lithium secondary battery. Also in general, when a positive electrode material having a high potential and a large capacity and a negative electrode material having a large capacity are used, significant improvement of the power density and the energy density of the battery can be attempted.

Incidentally, in a general all-solid-state lithium secondary battery, a positive electrode has a configuration in which a positive electrode active material layer is disposed on a surface of a positive electrode current collector. Then, the positive electrode active material layer contains, in addition to the positive electrode active material, a solid electrolyte for improving lithium ion conductivity in the positive electrode active material layer, and a binder for binding particles of the positive electrode active material and particles of the solid electrolyte to each other or these particles to the positive electrode current collector.

Here, WO 2020/241691 A and JP 2020 098696 A disclose an all-solid-state battery in which at least one layer of a positive electrode layer (positive electrode active material layer), a negative electrode layer (negative electrode active material layer), and a solid electrolyte layer contains a particulate first binder and a non-particulate second binder. According to WO 2020/241691 A, it is said that with such a configuration, an all-solid-state battery having good cycle characteristics can be provided.

### SUMMARY OF INVENTION

### Technical Problem

However, according to the study of the present inventors, it has been found that when the technique described in WO 2020/241691 A is adopted for a positive electrode active material layer of a secondary battery, sufficient rapid charging characteristics may not be obtained in the secondary battery to which the positive electrode active material layer is applied.

Therefore, an object of the present invention is to provide a means capable of improving rapid charging characteristics in a secondary battery.

### Solution to Problem

The present inventors have conducted intensive studies in order to solve the above problems. As a result, the present inventors have found that the above problem can be solved by controlling an amount of a solid electrolyte contained in a surface portion on a side being in contact with a positive electrode current collector to a specific value or less in a positive electrode active material layer, and have completed the present invention.

That is, an embodiment of the present invention relates to a secondary battery including a power generating element including: a positive electrode including a positive electrode active material layer disposed on a surface of a positive electrode current collector; a negative electrode; and a solid electrolyte layer containing a solid electrolyte and intervening the positive electrode and the negative electrode. In the secondary battery, the positive electrode active material layer is formed by laminating a first layer being in contact with the solid electrolyte layer and containing a positive electrode active material, a solid electrolyte, and a binder, and a second layer being in contact with the positive electrode current collector and containing a positive electrode active material and a binder. Then, a content of the solid electrolyte in the first layer is 1% by mass or more with respect to 100% by mass of a total solid content contained in the first layer, and a content of the solid electrolyte in the second layer is 0% by mass, or is more than 0% by mass and less than 1% by mass, with respect to 100% by mass of a total solid content contained in the second layer.

### BRIEF DESCRIPTION OF DRAWINGS

Fig. 1 is a perspective view showing an appearance of a flat-laminate type all-solid-state lithium secondary battery according to an embodiment of the present invention.
Fig. 2 is a cross-sectional view taken along line 2-2 shown in Fig. 1.
Fig. 3 is a cross-sectional view schematically showing a positive electrode according to an embodiment of the present invention.
Fig. 4 is a schematic view showing an example of a branched fibrous binder.

### DESCRIPTION OF EMBODIMENTS

An embodiment of the present invention relates to a secondary battery including a power generating element including: a positive electrode including a positive electrode active material layer disposed on a surface of a positive electrode current collector; a negative electrode; and a solid electrolyte layer containing a solid electrolyte and intervening the positive electrode and the negative electrode. In the secondary battery, the positive electrode active material layer is formed by laminating a first layer being in contact with the solid electrolyte layer and containing a positive electrode active material, a solid electrolyte, and a binder, and a second layer being in contact with the positive electrode current collector and containing a positive electrode active material and a binder. Then, a content of the solid electrolyte in the first layer is 1% by mass or more with respect to 100% by mass of a total solid content contained in the first layer, and a content of the solid electrolyte in the second layer is 0% by mass, or is more than 0% by mass and less than 1% by mass, with respect to 100% by mass of a total solid content contained in the second layer. According to the present embodiment, it is possible to improve rapid charging characteristics in the secondary battery.

Hereinafter, the embodiment of the present invention described above will be described with reference to the drawings, but the technical scope of the present invention should be determined based on the description of the claims, and is not limited only to the following embodiments. Note that dimensional ratios in the drawings are exaggerated for convenience of description, and may be different from actual ratios. Hereinafter, the present invention will be described by exemplifying a flat-laminate type (internal parallel connection type) all-solid-state lithium secondary battery, which is an embodiment of a secondary battery.

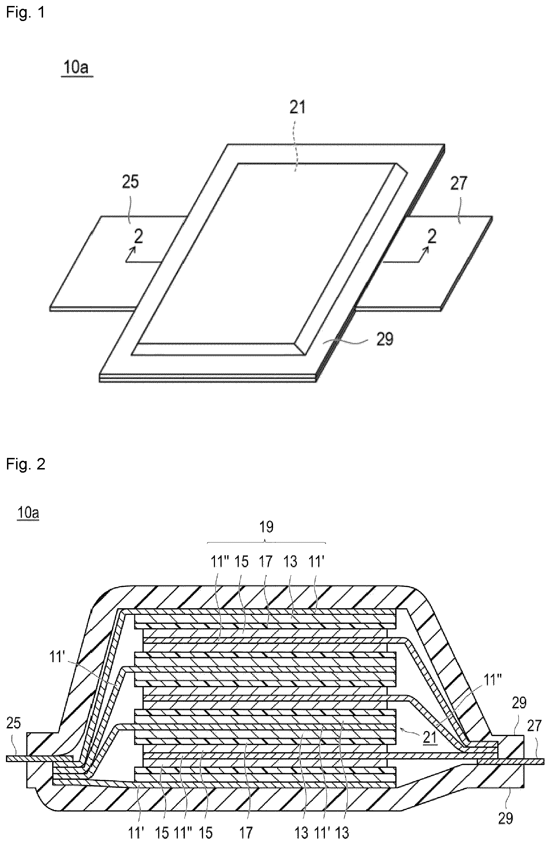

Fig. 1 is a perspective view showing an appearance of a flat-laminate type all-solid-state lithium secondary battery according to an embodiment of the present invention. Fig. 2 is a cross-sectional view taken along line 2-2 shown in Fig. 1. By adopting the laminate type, the battery can be made compact and have a high capacity. Incidentally, in the present specification, a flat-laminate type all-solid-state lithium secondary battery that is not a bipolar type (hereinafter, also simply referred to as a "laminate type battery") as shown in Figs. 1 and 2 will be described in detail as an example. However, when viewed in an electrical connection form (electrode structure) inside the secondary battery according to the present embodiment, the present invention can be applied to both a non-bipolar type (internal parallel connection type) battery and a bipolar type (internal series connection type) battery.

As shown in Fig. 1, the laminate type battery 10a has a rectangular flat shape, and a negative electrode current collecting plate 25 and a positive electrode current collecting plate 27 for extracting electric power are drawn out from both sides of the laminate type battery 10a. A power generating element 21 is wrapped with a battery outer casing material (laminate film 29) of the laminate type battery 10a, the periphery of the battery outer casing material (laminate film 29) is thermally fused, and the power generating element 21 is sealed in a state where the negative electrode current collecting plate 25 and the positive electrode current collecting plate 27 are drawn to the outside.

Incidentally, the secondary battery according to the present embodiment is not limited to a laminate type flat shape. In a wound type all-solid-state lithium secondary battery, for example, the shape may be a cylindrical shape, or may be a rectangular flat shape obtained by deforming such a cylindrical shape, and there is no particular limitation. In the above cylindrical shape, for example, a laminate film may be used for the outer casing material, or a conventional cylindrical can (metal can) may be used, and there is no particular limitation. Preferably, the power generating element is housed inside a laminate film containing aluminum. According to this form, weight reduction can be achieved.

In addition, taking out of the current collecting plates (25, 27) shown in Fig. 1 is also not particularly limited. Taking out of the current collecting plates (25, 27) is not limited to that shown in Fig. 1., and for example, the negative electrode current collecting plate 25 and the positive electrode current collecting plate 27 may be drawn out from the same side, or the negative electrode current collecting plate 25 and the positive electrode current collecting plate 27 may be divided into a plurality of portions and taken out from the respective sides. In addition, in the wound type all-solid-state lithium secondary battery, for example, a terminal may be formed using a cylindrical can (metal can) instead of a tab.

As shown in Fig. 2, the laminate type battery 10a of the present embodiment has a structure in which a flat and substantially rectangular power generating element 21 in which a charge-discharge reaction actually proceeds is sealed inside a laminate film 29, which is a battery outer casing material. Here, the power generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated in this order such that one positive electrode active material layer 15 and a negative electrode active material layer 13 adjacent thereto face each other with a solid electrolyte layer 17 interposed therebetween. Thus, the adjacent positive electrode, solid electrolyte layer, and negative electrode constitute one single battery layer 19. Therefore, it can also be said that the laminate type battery 10a shown in Fig. 2 has a configuration in which a plurality of single battery layers 19 are laminated to be electrically connected in parallel. In addition, to the laminate type battery 10a, a restraint pressure is applied in a laminating direction of the power generating element 21 by a restraint member (pressure member) (not shown). Therefore, the volume of the power generating element 21 is kept constant.

As shown in Fig. 2, in the outermost layer negative electrode current collectors located in both outermost layers of the power generating element 21, a negative electrode active material layer 13 is disposed only on one surface for both the outermost layer negative electrode current collectors, but active material layers may be provided on both surfaces. That is, instead of a current collector dedicated to the outermost layer in which an active material layer is provided only on one surface, a current collector having active material layers on both surfaces may be used as it is as a current collector of the outermost layer.

To the negative electrode current collector 11' and the positive electrode current collector 11", a negative electrode current collecting plate (tab) 25 and a positive electrode current collecting plate (tab) 27 that are electrically connected to the respective electrodes (positive electrode and negative electrode) are respectively attached, and the negative electrode current collecting plate (tab) 25 and the positive electrode current collecting plate (tab) 27 have a structure in which the negative electrode current collecting plate (tab) 25 and the positive electrode current collecting plate (tab) 27 are led to the outside of the laminate film 29 so as to be sandwiched between ends of the laminate film 29, which is a battery outer casing material. The positive electrode current collecting plate 27 and the negative electrode current collecting plate 25 may be attached to the positive electrode current collector 11" and the negative electrode current collector 11' of each electrode by ultrasonic welding, resistance welding, or the like via a positive electrode lead and a negative electrode lead (not shown), respectively, as necessary.

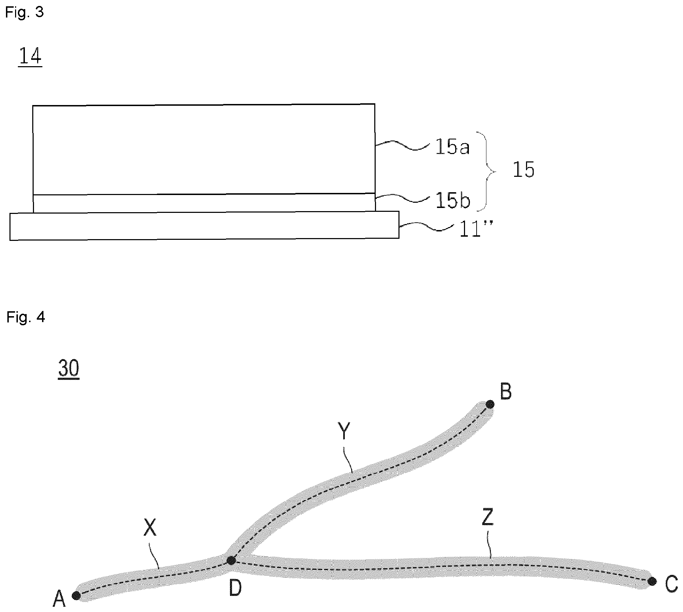

Fig. 3 is a cross-sectional view schematically showing a positive electrode according to the present embodiment. As shown in Fig. 3, the positive electrode 14 has a structure in which a positive electrode active material layer 15 is disposed on a surface of a positive electrode current collector 11". Although not shown in Fig. 3, an exposed surface of the positive electrode active material layer 15 on a side not being in contact with the positive electrode current collector 11" is in contact with a solid electrolyte layer 17 (see Fig. 2). The positive electrode active material layer 15 has a configuration in which a first layer 15a being in contact with the solid electrolyte layer 17 and containing a positive electrode active material, a solid electrolyte, and a binder, and a second layer 15b being in contact with the positive electrode current collector 11" and containing a positive electrode active material and a binder are laminated.

Hereinafter, main constituent members of the secondary battery according to the present embodiment will be described.

### [Current collector]

The current collector (the negative electrode current collector 11' and the positive electrode current collector 11") has a function of mediating transfer of electrons from an electrode active material layer. The material constituting the current collector is not particularly limited. As the constituent material of the current collector, for example, a metal or a resin having conductivity can be adopted.

Specific examples of the metal include aluminum, nickel, iron, stainless steel, titanium, copper, and the like. In addition to these, a clad material of nickel and aluminum, a clad material of copper and aluminum, or the like may be used. In addition, the metal may be a foil in which a metal surface is coated with aluminum. Among them, from the viewpoint of electron conductivity, battery operating potential, adhesion of the active material, and the like, aluminum, stainless steel, copper, and nickel are preferable.

In addition, examples of the latter resin having conductivity include a resin obtained by adding a conductive filler to a conductive polymer material or a non-conductive polymer material as necessary.

Incidentally, the current collector may have a single-layer structure made of a single material, or may have a laminated structure in which layers made of these materials are appropriately combined. From the viewpoint of weight reduction of the current collector, it is preferable to include at least a conductive resin layer made of a resin having conductivity. In addition, from the viewpoint of blocking the movement of lithium ions between single battery layers, a metal layer may be provided on a part of the current collector.

### [Negative electrode (negative electrode active material layer)]

In the laminate type battery according to the embodiment shown in Figs. 1 and 2, the negative electrode active material layer 13 contains a negative electrode active material. The type of the negative electrode active material is not particularly limited, and examples thereof include a carbon material, a metal oxide, and a metal active material. In addition, as the negative electrode active material, a metal containing lithium may be used. Such a negative electrode active material is not particularly limited as long as it is an active material containing lithium, and examples thereof include a lithium-containing alloy in addition to metal lithium. Examples of the lithium-containing alloy include an alloy of Li and at least one of In, Al, Si, Sn, Mg, Au, Ag, and Zn. The negative electrode active material preferably contains metal lithium or a lithium-containing alloy, a silicon-based negative electrode active material, or a tin-based negative electrode active material, and particularly preferably contains metal lithium or a lithium-containing alloy. Incidentally, when the negative electrode active material uses metal lithium or a lithium-containing alloy, the secondary battery according to the present embodiment can be a so-called lithium deposition type in which lithium metal as a negative electrode active material is deposited on a negative electrode current collector in a charging process. Therefore, in such a form, the thickness of the negative electrode active material layer increases with the progress of a charging process, and the thickness of the negative electrode active material layer decreases with the progress of a discharging process. The negative electrode active material layer may not be present at the time of complete discharge, and in some cases, a negative electrode active material layer made of a certain amount of lithium metal may be disposed at the time of complete discharge.

The content of the negative electrode active material in the negative electrode active material layer is not particularly limited, and for example, is preferably within a range of 40 to 99% by mass, and more preferably within a range of 50 to 90% by mass.

It is preferable that the negative electrode active material layer further contains a solid electrolyte. When the negative electrode active material layer contains a solid electrolyte, it is possible to improve the ion conductivity of the negative electrode active material layer. Examples of the solid electrolyte include a sulfide solid electrolyte and an oxide solid electrolyte, and a sulfide solid electrolyte is preferable. Incidentally, in the present specification, the solid electrolyte refers to a material mainly composed of an ion conductor capable of ion conduction in a solid, and particularly refers to a material in which lithium ion conductivity at normal temperature (25°C) is 1 × 10⁻⁵ S/cm or more, and the lithium ion conductivity is preferably 1 × 10⁻⁴ S/cm or more. Here, the value of the ion conductivity can be measured by an AC impedance method.

Examples of the sulfide solid electrolyte include LiI-Li₂S-SiS₂, LiI-Li₂S-P₂O₅, LiI-Li₃PO₄-P₂S₅, Li₂S-P₂S₅, LiI-Li₃PS₄, LiI-LiBr-Li₃PS₄, Li₃PS₄, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein m and n are positive numbers, and Z is any of Ge, Zn, and Ga), Li₂S-GeS₂, Li₂S-SiS₂-Li₃PO₄, Li₂S-SiS₂-LiₓMO_{y} (wherein x and y are positive numbers, and M is any of P, Si, Ge, B, Al, Ga, and In), and the like. Incidentally, the description of "Li₂S-P₂S₅" means a sulfide solid electrolyte obtained using a raw material composition containing Li₂S and P₂S₅, and the same applies to other descriptions.

The sulfide solid electrolyte may have, for example, a Li₃PS₄ skeleton, may have a Li₄P₂S₇ skeleton, or may have a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. In addition, examples of the sulfide solid electrolyte having a Li₄P₂S₇ skeleton include a Li-P-S-based solid electrolyte called LPS (for example, Li₇P₃S₁₁). In addition, as the sulfide solid electrolyte, for example, LGPS represented by Li₍₄₋ₓ₎Ge₍₁₋ₓ₎PₓS₄ (x satisfies 0 < x < 1) or the like may be used. Among them, the sulfide solid electrolyte contained in the active material layer is preferably a sulfide solid electrolyte containing a P element, and the sulfide solid electrolyte is more preferably a material containing Li₂S-P₂S₅ as a main component. Furthermore, the sulfide solid electrolyte may contain halogen (F, Cl, Br, I). In a preferred embodiment, the sulfide solid electrolyte includes Li₆PS₅X (wherein X is Cl, Br, or I, preferably Cl).

In addition, when the sulfide solid electrolyte is Li₂S-P₂S₅-based, the ratio of Li₂S and P₂S₅ as a molar ratio is preferably within a range of Li₂S : P₂S₅ = 50 : 50 to 100 : 0, and particularly preferably Li₂S : P₂S₅ = 70 : 30 to 80 : 20.

In addition, the sulfide solid electrolyte may be sulfide glass, may be crystallized sulfide glass, or may be a crystalline material obtained by a solid phase method. Incidentally, the sulfide glass can be obtained, for example, by performing mechanical milling (ball milling or the like) on the raw material composition. In addition, the crystallized sulfide glass can be obtained, for example, by heat-treating the sulfide glass at a temperature equal to or higher than a crystallization temperature.

Examples of the oxide solid electrolyte include a compound having a NASICON type structure and the like. An example of the compound having a NASICON type structure includes a compound (LAGP) represented by the general formula Li₁₊ₓAlₓGe₂₋ₓ(PO₄)₃(0 ≤ x ≤ 2), a compound (LATP) represented by the general formula Li₁₊ₓAlₓTi₂₋ₓ(PO₄)₃ (0 ≤ x ≤ 2), or the like. In addition, other examples of the oxide solid electrolyte include LiLaTiO (for example, Li_{0.34}La_{0.51}TiO₃), LiPON (for example, Li_{2.9}PO_{3.3}N_{0.46}), LiLaZrO (for example, Li₇La₃Zr₂O₁₂), and the like.

Examples of the shape of the solid electrolyte include a particulate shape such as a perfect spherical shape and an elliptical spherical shape, a thin film shape, and the like. When the solid electrolyte has a particulate shape, the average particle diameter (D50) of the solid electrolyte is not particularly limited, and is preferably 40 µm or less, more preferably 20 µm or less, and still more preferably 10 µm or less. On the other hand, the average particle diameter (D50) is preferably 0.01 µm or more, and more preferably 0.1 µm or more.

The content of the solid electrolyte in the negative electrode active material layer is, for example, preferably within a range of 1 to 60% by mass, and more preferably within a range of 10 to 50% by mass.

The negative electrode active material layer may further contain at least one of a binder and a conductive aid in addition to the negative electrode active material and the solid electrolyte described above.

The binder is not particularly limited, and examples thereof include thermoplastic polymers such as polybutylene terephthalate, polyethylene terephthalate, polyvinylidene fluoride (PVDF) (including a compound in which a hydrogen atom is substituted with another halogen element), polyethylene, polypropylene, polymethylpentene, polybutene, polyether nitrile, polytetrafluoroethylene (PTFE), polyacrylonitrile, polyimide, polyamide, an ethylene-vinyl acetate copolymer, polyvinyl chloride, styrene-butadiene rubber (SBR), an ethylene-propylene-diene copolymer, a styrene-butadiene-styrene block copolymer and a hydrogenated product thereof, and a styrene-isoprene-styrene block copolymer and a hydrogenated product thereof; fluorine resins such as a tetrafluoroethylene-hexafluoropropylene copolymer (FEP), a tetrafluoroethylene-perfluoroalkylvinylether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride-based fluorine rubbers such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber); epoxy resins; carboxymethyl cellulose; and the like. Among them, polyimide, styrene-butadiene rubber, carboxymethyl cellulose, polypropylene, polytetrafluoroethylene, polyacrylonitrile, and polyamide are more preferable.

The conductive aid is not particularly limited, and examples thereof include metals such as aluminum, stainless steel (SUS), silver, gold, copper, and titanium, alloys containing these metals, or metal oxides; and carbon such as carbon fibers (specifically, vapor grown carbon fibers (VGCFs), polyacrylonitrile-based carbon fibers, pitch-based carbon fibers, rayon-based carbon fibers, activated carbon fibers, and the like), carbon nanotubes (CNTs), and carbon black (specifically, acetylene black, Ketjen black (registered trademark), furnace black, channel black, thermal lamp black, and the like). In addition, a material obtained by coating a periphery of a particulate ceramic material or resin material with the above metal material by plating or the like can also be used as a conductive aid. Among these conductive aids, from the viewpoint of electrical stability, it is preferable to contain at least one selected from the group consisting of aluminum, stainless steel, silver, gold, copper, titanium, and carbon, it is more preferable to contain at least one selected from the group consisting of aluminum, stainless steel, silver, gold, and carbon, and it is still more preferable to contain at least one carbon. Regarding these conductive aids, only one type may be used alone, or two or more types may be used in combination. The electron conductivity of the conductive aid is preferably 1 S/m or more, more preferably 1 × 10² S/m or more, still more preferably 1 × 10⁴ S/m or more, and yet more preferably 1 × 10⁵ S/m or more. The upper limit value of the electron conductivity of the conductive aid is not particularly limited, and is usually 1 × 10⁷ S/m or less.

It is preferable that the shape of the conductive aid is a particulate shape or a fibrous shape. When the conductive aid has a particulate shape, the shape of the particle is not particularly limited, and may be any shape such as a powder shape, a spherical shape, a rod shape, a needle shape, a plate shape, a columnar shape, an irregular shape, a scaly shape, and a spindle shape.

The average particle diameter (primary particle diameter) when the conductive aid has a particulate shape is not particularly limited, and is preferably 0.01 to 10 µm from the viewpoint of electrical characteristics of the battery. Incidentally, in the present specification, the "particle diameter of the conductive aid" means the maximum distance L of the distances between any two points on the outline of the conductive aid. As the value of the "average particle diameter of the conductive aid", a value calculated as an average value of particle diameters of particles observed in several to several tens of visual fields using an observation means such as a scanning electron microscope (SEM) or a transmission electron microscope (TEM) shall be adopted.

When the negative electrode active material layer contains a conductive aid, the content of the conductive aid in the negative electrode active material layer is not particularly limited, and is preferably 0 to 10% by mass, more preferably 2 to 8% by mass, and still more preferably 4 to 7% by mass, with respect to a total mass of the negative electrode active material layer. Within such a range, it becomes possible to form a stronger electron conduction path in the negative electrode active material layer, and it is possible to effectively contribute to improvement of battery characteristics.

The thickness of the negative electrode active material layer varies depending on the configuration of the intended secondary battery, and is, for example, preferably within a range of 0.1 to 1000 µm.

### [Solid electrolyte layer]

In the laminate type battery according to the embodiment shown in Figs. 1 and 2, the solid electrolyte layer 17 is a layer necessarily containing a solid electrolyte and intervening the positive electrode active material layer and the negative electrode active material layer.

The specific form of the solid electrolyte contained in the solid electrolyte layer is not particularly limited, and the solid electrolyte exemplified in the section of the negative electrode active material layer and a preferred form thereof can be similarly adopted. In some cases, a solid electrolyte other than the solid electrolyte described above may be used in combination.

The solid electrolyte layer may further contain a binder in addition to the solid electrolyte described above.

The thickness of the solid electrolyte layer varies depending on the configuration of the intended lithium secondary battery, and is preferably 600 µm or less, more preferably 500 µm or less, and still more preferably 400 µm or less from the viewpoint that the volume energy density of the battery can be improved. On the other hand, the lower limit value of the thickness of the solid electrolyte layer is not particularly limited, and is preferably 1 µm or more, more preferably 5 µm or more, and still more preferably 10 µm or more.

### [Positive electrode active material layer]

In the laminate type battery according to the embodiment shown in Figs. 1 and 2, the positive electrode active material layer 15 necessarily contains a solid electrolyte and a binder. Then, the positive electrode active material layer 15 has a configuration in which a first layer being in contact with the solid electrolyte layer 17 and a second layer being in contact with the negative electrode active material layer 13 are laminated.

### (1) First layer

In the positive electrode active material layer, the first layer is disposed so as to be in contact with the solid electrolyte layer. The first layer necessarily contains a positive electrode active material, a solid electrolyte, and a binder.

### (Positive electrode active material)

The type of the positive electrode active material contained in the first layer is not particularly limited, and examples thereof include layered rock salt type active materials such as LiCoO₂, LiMnO₂, LiNiO₂, LiVO₂, and Li(Ni-Mn-Co)O₂; spinel type active materials such as LiMn₂O₄ and LiNi_{0.5}Mn_{1.5}O₄; olivine type active materials such as LiFePO₄ and LiMnPO₄; Si-containing active materials such as Li₂FeSiO₄ and Li₂MnSiO₄; and the like. In addition, examples of oxide active materials other than those described above include Li₄Ti₅O₁₂. Among them, a composite oxide containing lithium and nickel is preferably used, and Li(Ni-Mn-Co)O₂ and a composite oxide in which some of these transition metals are substituted with other elements (hereinafter, also simply referred to as "NMC composite oxide") are more preferably used. The NMC composite oxide has a layered crystal structure in which a lithium atomic layer and a transition metal (Mn, Ni, and Co are orderly arranged) atomic layer are alternately stacked with an oxygen atomic layer interposed therebetween, one Li atom is contained per atom of the transition metal M, the amount of Li that can be taken out is twice that of a spinel type lithium manganese oxide, that is, the supply capacity is twice that of the spinel type lithium manganese oxide, and the NMC composite oxide can have a high capacity.

As described above, the NMC composite oxide also includes a composite oxide in which some of transition metal elements are substituted with other metal elements. Examples of the other elements in this case include Ti, Zr, Nb, W, P, Al, Mg, V, Ca, Sr, Cr, Fe, B, Ga, In, Si, Mo, Y, Sn, V, Cu, Ag, Zn, and the like, and the other elements are preferably Ti, Zr, Nb, W, P, Al, Mg, V, Ca, Sr, and Cr, more preferably Ti, Zr, P, Al, Mg, and Cr, and from the viewpoint of improving cycle characteristics, further preferably Ti, Zr, Al, Mg, and Cr.

Furthermore, it is also one of preferred embodiments that a sulfur-based positive electrode active material is used. Examples of the sulfur-based positive electrode active material include particles or thin films of an organic sulfur compound or an inorganic sulfur compound, and any material may be used as long as it can release lithium ions during charge and occlude lithium ions during discharge by utilizing an oxidation-reduction reaction of sulfur.

In some cases, two or more types of positive electrode active materials may be used in combination. Incidentally, it is needless to say that a positive electrode active material other than the above may be used.

Examples of the shape of the positive electrode active material include a particulate shape (a spherical shape, a fibrous shape), a thin film shape, and the like. When the positive electrode active material has a particulate shape, the average particle diameter (D₅₀) thereof is, for example, preferably within a range of 1 nm to 100 µm, more preferably within a range of 10 nm to 50 µm, still more preferably within a range of 100 nm to 20 µm, and particularly preferably within a range of 1 to 20 µm. Incidentally, in the present specification, the value of the average particle diameter (D₅₀) can be measured by a laser diffraction scattering method.

The content of the positive electrode active material in the first layer is not particularly limited, and is preferably more than 50% by mass, more preferably within a range of more than 50% by mass and 95% by mass or less, and still more preferably within a range of 60% by mass or more and 90% by mass or less, with respect to 100% by mass of a total solid content contained in the first layer.

### (Solid electrolyte)

The type of the solid electrolyte contained in the first layer is not particularly limited, and it is more preferable to contain a sulfide solid electrolyte. As a specific form and a preferred form of the solid electrolyte such as a sulfide solid electrolyte, those described in the section of the solid electrolyte layer described above can be similarly adopted.

The content of the solid electrolyte in the first layer is necessarily 1% by mass or more with respect to 100% by mass of a total solid content contained in the first layer. When the content of the solid electrolyte in the first layer is less than 1% by mass, the ion conductivity of the first layer is low, so that the internal resistance of the battery increases, and sufficient rapid charging characteristics may not be obtained. The content of the solid electrolyte in the first layer is preferably 1% by mass or more and 70% by mass or less, more preferably 5% by mass or more and 50% by mass or less, and still more preferably 10% by mass or more and 30% by mass or less. When the content of the solid electrolyte in the first layer is within the above range, both the ion conductivity and the energy density of the first layer can be achieved.

### (Binder)

The type of the binder contained in the first layer is not particularly limited, and those described in the section of the negative electrode active material layer described above can be similarly adopted. Among them, it is preferable that the binder contained in the first layer includes a fibrous binder. More specifically, an area ratio of the fibrous binder to a total area of the binder in an observation image when a cross section of the first layer is observed using a scanning electron microscope (SEM) is preferably more than 50%, more preferably 80% or more and 100% or less, still more preferably 90% or more and 100% or less, particularly preferably 95% or more and 100% or less, and most preferably 100%. When the area ratio of the fibrous binder in the first layer is within the above range, a contact area between respective particles of the positive electrode active material, the solid electrolyte, and the conductive aid optionally contained is increased, so that the internal resistance of the battery is suppressed to be low, and it is possible to further improve rapid charging characteristics. Incidentally, in the present specification, the "cross section of a layer" refers to a cross section when the layer is cut in a laminating direction in the secondary battery (that is, a cross section when cut in a thickness direction of the layer). In addition, in the present specification, the "fibrous binder" refers to a binder mainly composed of fibers in which an aspect ratio is 10 or more and a minimum Feret diameter is 0.2 µm or less in an observation image obtained when a cross section of the positive electrode active material layer is observed using a scanning electron microscope (SEM). Incidentally, the aspect ratio is calculated by dividing the maximum Feret diameter by the minimum Feret diameter. The maximum Feret diameter is a maximum distance between two parallel straight lines when the outline of the binder is sandwiched between the straight lines, and the minimum Feret diameter is a minimum distance between two parallel straight lines when the outline of the binder is sandwiched between the straight lines. The phrase a certain binder is "mainly composed of" the above fibers means that an area ratio of the above fiber portion to a total area of the binder in an SEM observation image is 50% or more. One fibrous binder can include a portion other than fibers in which an aspect ratio is 10 or more and a minimum Feret diameter is 0.2 µm or less (a portion in which an aspect ratio is less than 10 or a portion in which a minimum Feret diameter is more than 0.2 µm). However, it is essential that the area ratio of the portion other than the fibers to the total area of the fibrous binder in an SEM observation image is less than 50%, and is preferably 20% or less, more preferably 10% or less, and still more preferably 5% or less (the lower limit value is 0%). The fibrous binder includes not only those composed of only one fiber but also those having a configuration in which two or more fibers are connected to each other. Specific examples of the shape of the binder having a configuration in which two or more fibers are connected to each other include a branched shape, a radial shape, a mesh shape, and a shape obtained by combining these shapes.

Here, a method for determining the maximum Feret diameter and the minimum Feret diameter in a binder having a configuration in which two or more fibers are connected to each other will be described. Fig. 4 is a schematic view showing an example of a branched fibrous binder. The binder 30 shown in Fig. 4 has a configuration in which fiber X, fiber Y, and fiber Z are connected to each other. Each broken line represents a line connecting the center (1/2 width) of the width of a fiber, and point A, point B, and point C represent ends of each broken line. Incidentally, the ends of each broken line coincide with the ends of the fiber. Point D represents an intersection of three broken lines. That is, the binder 30 shown in Fig. 4 can also be said to have a shape in which fiber X from point A to point D, fiber Y from point B to point D, and fiber Z from point C to point D are bonded at point D. The maximum Feret diameter of fiber X in the binder 30 shown in Figure 4 is defined as a distance from point A to point D. Similarly, the maximum Feret diameter of fiber Y is a distance from point B to point D, and the maximum Feret diameter of fiber Z is a distance from point C to point D. In addition, the minimum Feret diameter of fiber X is a minimum distance between two parallel straight lines when the outline of the binder (fiber) between point A and point D is sandwiched between the straight lines. The same applies to the minimum Feret diameter of fiber Y and fiber Z. In the binder 30 shown in Fig. 4, fiber Y and fiber Z are fibers in which an aspect ratio is 10 or more and a minimum Feret diameter is 0.2 µm or less, but in fiber X, an aspect ratio is less than 10. However, since the area of the fiber X portion in the total area of the binder 30 is less than 50%, it can be said that the binder shown in Fig. 4 is a fibrous binder.

The type of the fibrous binder is not particularly limited as long as it has the above shape in the positive electrode active material layer, and a binder that is fibrillated by applying a shear force can be suitably used. As the type of the binder capable of being fibrillated, polytetrafluoroethylene (PTFE), carboxymethyl cellulose, polyethylene oxide, polyvinyl alcohol, and polyethylene are preferable, and polytetrafluoroethylene (PTFE) is more preferable. By using such a binder, achievement of both the binding property and the contact between respective particles becomes better, so that it is possible to further improve rapid charging characteristics. Regarding the fibrous binder, only one type may be used alone, or two or more types may be used in combination. Incidentally, in the present specification, the description of a compound name for a binder can include not only the compound indicated by the compound name but also a form in which a part of a terminal or side chain is substituted (modified) with another substituent. In the case of the form in which a part of a terminal or side chain is substituted (modified) with another substituent, the proportion of a structural unit in which a terminal or side chain is substituted (modified) with another substituent with respect to 100 mol% of all structural units is preferably 10 mol% or less, and more preferably 5 mol% or less.

### (Conductive aid)

The first layer can contain a conductive aid as necessary. The type of the conductive aid is not particularly limited, and those described in the section of the negative electrode active material layer described above can be similarly adopted. Among them, it is preferable that the conductive aid contained in the first layer contains fibrous carbon. Incidentally, in the present specification, the "fibrous carbon" refers to conductive carbon in which an aspect ratio is 10 or more and a minimum Feret diameter is 0.2 µm or less in an observation image when observed using a scanning electron microscope (SEM). As described above, the electron conductivity of the conductive carbon is preferably 1 S/m or more, more preferably 1 × 10² S/m or more, still more preferably 1 × 10⁴ S/m or more, and yet more preferably 1 × 10⁵ S/m or more. The upper limit value of the electron conductivity of the conductive carbon is not particularly limited, and is usually 1 × 10⁷ S/m or less.

The type of the fibrous carbon is not particularly limited as long as it has the above shape, and examples thereof include carbon fibers (carbon nanofibers), graphene, and carbon nanotubes (single-walled carbon nanotubes and multi-walled carbon nanotubes). Among them, carbon fibers (carbon nanofibers) are preferable. Regarding the fibrous carbon, only one type may be used alone, or two or more types may be used in combination.

The content of the fibrous carbon in a total amount of 100% by mass of the conductive aid contained in the first layer is preferably more than 50% by mass, more preferably 80% by mass or more and 100% by mass or less, still more preferably 90% by mass or more and 100% by mass or less, particularly preferably 95% by mass or more and 100% by mass or less, and most preferably 100% by mass.

The thickness of the first layer varies depending on the configuration of the intended secondary battery, and is preferably 50 µm or more and 120 µm or less, and more preferably 60 µm or more and 100 µm or less. When the thickness of the first layer is within the above range, a sufficient energy density can be secured.

The method for producing the first layer is not particularly limited, and a known method can be appropriately referred to. For the first layer containing a fibrous binder, a shear force is applied to a mixture containing a positive electrode active material, a solid electrolyte, a binder capable of being fibrillated, and a conductive aid (preferably fibrous carbon) added as necessary by an appropriate method to fibrillate the binder. Then, by forming the fibrillated mixture into a sheet shape, the first layer can be obtained. Incidentally, it is preferable that the above mixture is a powdery mixture substantially not containing a liquid component. The content of the liquid component in the mixture is preferably 5% by mass or less, more preferably 3% by mass or less, still more preferably 1% by mass or less, yet more preferably 0.5% by mass or less, particularly preferably 0.1% by mass or less, and most preferably 0% by mass, with respect to 100% by mass of the mixture.

### (2) Second layer

In the positive electrode active material layer, the second layer is disposed so as to be in contact with the positive electrode current collector. The second layer necessarily contains a positive electrode active material and a binder.

### (Positive electrode active material)

As the type of the positive electrode active material contained in the second layer, the positive electrode active material exemplified in the section of the first layer and a preferred form thereof can be similarly adopted. Incidentally, the positive electrode active material contained in the first layer and the positive electrode active material contained in the second layer may be the same or different, but are preferably the same.

The content of the positive electrode active material in the second layer is not particularly limited, and is preferably more than 50% by mass, more preferably within a range of more than 50% by mass and 95% by mass or less, and still more preferably within a range of 60% by mass or more and 90% by mass or less, with respect to 100% by mass of a total solid content contained in the second layer. When the content of the positive electrode active material in the second layer is within the above range, the energy density can be maintained.

### (Binder)

The type of the binder contained in the second layer is not particularly limited, and those described in the section of the negative electrode active material layer described above can be similarly adopted. Among them, it is preferable that the binder contained in the second layer includes a non-fibrous binder. More specifically, an area ratio of the non-fibrous binder to a total area of the binder in an observation image when a cross section of the second layer is observed using a scanning electron microscope (SEM) is preferably more than 50%, more preferably 80% or more and 100% or less, still more preferably 90% or more and 100% or less, particularly preferably 95% or more and 100% or less, and most preferably 100% (that is, an area ratio of the fibrous binder is preferably less than 50%, more preferably 0% or more and 20% or less, still more preferably 0% or more and 10% or less, particularly preferably 0% or more and 5% or less, and most preferably 0%). When the area ratio of the non-fibrous binder in the second layer is within the above range, adhesion between the second layer and the positive electrode current collector is improved, and the second layer can be prevented from peeling off from the positive electrode current collector. As a result, the internal resistance of the battery is suppressed to be low, and it is possible to further improve rapid charging characteristics. Incidentally, in the present specification, the "non-fibrous binder" means a binder other than the "fibrous binder" described above. That is, in the present specification, the "non-fibrous binder" refers to a binder in which an aspect ratio is less than 10 or a minimum Feret diameter is more than 0.2 µm in an observation image obtained when a cross section of the positive electrode active material layer is observed using a scanning electron microscope (SEM). Determination as to whether the binder is a "non-fibrous binder" and calculation of the "area ratio of the non-fibrous binder" are performed by the method described in Examples described later.

The type of the non-fibrous binder is not particularly limited as long as it has the above shape in the positive electrode active material layer, and styrene-butadiene rubber (SBR), polyvinylidene fluoride (PVDF), ethyl cellulose, and an acrylic resin are preferable, and polyvinylidene fluoride (PVDF) is more preferable. By using such a binder, the second layer and the positive electrode current collector can be firmly adhered to each other, so that it is possible to further improve rapid charging characteristics. Regarding the non-fibrous binder, only one type may be used alone, or two or more types may be used in combination. Incidentally, as described above, the above binder can include a form in which a part of a terminal or side chain is substituted (modified) with another substituent.

### (Conductive aid)

The second layer can contain a conductive aid as necessary. The type of the conductive aid is not particularly limited, and those described in the section of the negative electrode active material layer described above can be similarly adopted. Among them, it is preferable that the conductive aid contained in the second layer includes fibrous carbon. The type of the conductive aid is not particularly limited, and those described in the section of the first layer described above can be similarly adopted. Incidentally, the conductive aid (preferably fibrous carbon) contained in the first layer and the conductive aid (preferably fibrous carbon) contained in the second layer may be the same or different, but are preferably the same.

The content of the fibrous carbon in a total amount of 100% by mass of the conductive aid contained in the second layer is preferably more than 50% by mass, more preferably 80% by mass or more and 100% by mass or less, still more preferably 90% by mass or more and 100% by mass or less, particularly preferably 95% by mass or more and 100% by mass or less, and most preferably 100% by mass.

### (Solid electrolyte)

In the present invention, the second layer is characterized in that the second layer does not contain a solid electrolyte or contains an extremely small amount of a solid electrolyte even when the second layer contains a solid electrolyte. More specifically, the content of the solid electrolyte in the second layer is 0% by mass, or is more than 0% by mass and less than 1% by mass, with respect to 100% by mass of a total solid content contained in the second layer. When the content of the solid electrolyte contained in the second layer is 1% by mass or more, rapid charging characteristics may not be sufficient. This is considered to be because when the potential of the positive electrode current collector during charge increases, the solid electrolyte being in contact with the positive electrode current collector in the second layer deteriorates due to oxidation, and the internal resistance of the battery increases. For this reason, the content of the solid electrolyte in the second layer is preferably 0% by mass, or more than 0% by mass and 0.5% by mass or less, more preferably 0% by mass, or more than 0% by mass and 0.1% by mass or less, and particularly preferably 0% by mass, with respect to 100% by mass of a total solid content contained in the second layer.

The type of the solid electrolyte when the second layer contains a solid electrolyte is not particularly limited, and it is more preferable to contain a sulfide solid electrolyte. As a specific form and a preferred form of the solid electrolyte such as a sulfide solid electrolyte, those described in the section of the solid electrolyte layer described above can be similarly adopted. Incidentally, the solid electrolyte contained in the first layer and the solid electrolyte contained in the second layer may be the same or different, but are preferably the same.

The thickness of the second layer is preferably 0.1 µm or more and less than 5 µm, and more preferably 1 µm or more and 4 µm or less. When the thickness of the second layer is 0.1 µm or more, deterioration of the solid electrolyte is effectively suppressed, so that an increase in internal resistance of the battery can be prevented. When the thickness of the second layer is less than 5 µm, the energy density can be maintained.

The method for producing the second layer is not particularly limited, and a known method can be appropriately referred to. As an example, a slurry is prepared by adding an appropriate dispersion medium to a positive electrode active material, a binder, a conductive aid (preferably fibrous carbon) added as necessary, and a solid electrolyte added as necessary. The second layer can be obtained by applying the slurry onto a support (for example, a positive electrode current collector) and removing the dispersion medium. As another example, a second layer can be obtained by kneading a mixture containing a positive electrode active material, a binder, a conductive aid (preferably fibrous carbon) added as necessary, and a solid electrolyte added as necessary, and then forming the mixture into a sheet shape. In this case, it is preferable that the mixture does not substantially contain a liquid component, and a preferred form of the content of the liquid component in the mixture is the same as that described above for the mixture used for producing the first layer.

In the secondary battery according to the present embodiment, it is preferable that at least one of the first layer and the second layer described above contains a conductive aid made of fibrous carbon, and it is preferable that both the first layer and the second layer contain a conductive aid made of fibrous carbon. When the first layer and/or the second layer contains fibrous carbon as a conductive aid, the internal resistance of the battery is suppressed to be low, and it is possible to further improve rapid charging characteristics.

In the secondary battery according to the present embodiment, particularly preferably, in the first layer, the binder includes a fibrous binder, and an area ratio of the fibrous binder to an area of the binder in an observation image when a cross section of the first layer is observed using a scanning electron microscope is more than 50%; in the second layer, the binder includes a non-fibrous binder, and an area ratio of the non-fibrous binder to an area of the binder in an observation image when a cross section of the second layer is observed using a scanning electron microscope is more than 50%; both the first layer and the second layer further contain a conductive aid made of fibrous carbon, the fibrous binder includes polytetrafluoroethylene, and the non-fibrous binder includes polyvinylidene fluoride. As shown in Example 1 described later, by having the above configuration, particularly excellent rapid charging characteristics are exhibited.

Incidentally, in the secondary battery according to the present embodiment, the positive electrode active material layer can include one layer or two or more other layers between the first layer and the second layer, but it is preferable that the first layer and the second layer are disposed adjacent to each other.

### [Positive electrode current collecting plate and negative electrode current collecting plate]

A material constituting the current collecting plates (25, 27) is not particularly limited, and a known highly conductive material conventionally used as a current collecting plate for a secondary battery can be used. As the constituent material of the current collecting plate, for example, a metal material such as aluminum, copper, titanium, nickel, stainless steel (SUS), or an alloy thereof is preferable. From the viewpoint of lightweight, corrosion resistance, and high conductivity, aluminum and copper are more preferable, and aluminum is particularly preferable. Incidentally, for the positive electrode current collecting plate 27 and the negative electrode current collecting plate 25, the same material may be used or different materials may be used.

### [Positive electrode lead and negative electrode lead]

In addition, although not shown, the current collectors and the current collecting plates may be electrically connected via a positive electrode lead or a negative electrode lead. As the constituent material of the positive electrode and negative electrode leads, a material used in a known lithium secondary battery can be similarly adopted. Incidentally, it is preferable that a portion taken out from an outer casing is covered with a heat resistant and insulating heat shrinkable tube or the like so as not to affect a product (for example, automotive components, in particular electronic devices, and the like) due to electric leakage or the like caused by contact with peripheral equipment, wiring, or the like.

### [Battery outer casing material]

As the battery outer casing material, a known metal can case can be used, and a bag-shaped case using a laminate film 29 containing aluminum, which can cover a power generating element as shown in Figs. 1 and 2, can be used. As the laminate film, for example, a laminate film having a three-layer structure formed by laminating PP, aluminum, and nylon in this order can be used, but the laminate film is not limited thereto. From the viewpoint of high output and excellent cooling performance, and being able to be suitably used for batteries for large devices for EV and HEV, a laminate film is desirable. In addition, since a group pressure applied to the power generating element from the outside can be easily adjusted, the outer casing body is more preferably a laminate film containing aluminum.

The laminate type battery according to the present embodiment has a configuration in which a plurality of single battery layers are connected in parallel, and thus has a high capacity and excellent cycle durability. Therefore, the laminate type battery according to the present embodiment is suitably used as a power source for driving EV and HEV.

Although an embodiment of the secondary battery of the present invention has been described above, the present invention is not limited to only the configuration described in the above-described embodiment, and can be appropriately changed based on the description of the claims.

### Examples

Hereinafter, the present invention will be described in more detail with reference to Examples. However, the technical scope of the present invention is not limited only to the following Examples. Incidentally, in the following, instruments, apparatuses, and the like used in a glove box were sufficiently dried in advance.

### <Production Example of evaluation cell>

### [Example 1]

### (Production of positive electrode active material layer)

### (1) Production of first layer

As constituent materials of a first layer, an NMC composite oxide (LiNi_{0.8}Mn_{0.1}Co_{0.1}O₂, average particle diameter (D50): 1 µm) as a positive electrode active material, an aldirodite type sulfide solid electrolyte (Li₆PS₅Cl, average particle diameter (D50): 0.2 µm) as a solid electrolyte, carbon nanofibers (CNFs) (VGCFs (registered trademark) manufactured by Showa Denko K. K., aspect ratio: 60, average fiber diameter: about 150 nm, average fiber length: about 9 µm) as a conductive aid, and polytetrafluoroethylene (PTFE) as a binder capable of being fibrillated were prepared. In a glove box in an argon atmosphere with a dew point of -68°C or lower, the positive electrode active material, the solid electrolyte, the conductive aid, and the binder were weighed so that the mass ratio was 79 : 16 : 3 : 2, and kneaded in an agate mortar. After confirming that the binder was fibrillated, the obtained mixture was formed into a sheet shape using a hand roller, and then punched into a circular shape having a size of 19 mm in diameter to obtain a first layer having a thickness of 80 µm.

### (2) Production of second layer

As constituent materials of a second layer, an NMC composite oxide (LiNi_{0.8}Mn_{0.1}Co_{0.1}O₂, average particle diameter (D50): 1 µm) as a positive electrode active material, carbon nanofibers (CNFs) (VGCFs (registered trademark) manufactured by Showa Denko K. K., aspect ratio: 60, average fiber diameter: about 150 nm, average fiber length: about 9 µm) as a conductive aid, and polyvinylidene fluoride (PVDF) as a binder were prepared. In a glove box in an argon atmosphere with a dew point of -68°C or lower, the positive electrode active material, the conductive aid, and the binder were weighed so that the mass ratio was 79 : 19 : 2, and kneaded in an agate mortar. The obtained mixture was formed into a sheet shape using a hand roller, and then punched into a circular shape having a size of 19 mm in diameter to obtain a second layer having a thickness of 3 µm.

### (Production of solid electrolyte layer)

In a glove box in an argon atmosphere with a dew point of -68°C or lower, 95 parts by mass of an aldirodite type sulfide solid electrolyte (Li₆PS₅Cl) as a solid electrolyte and a binder solution (a solution obtained by dissolving 5 parts by mass of styrene-butadiene rubber (SBR) as a binder in mesitylene as a solvent) were mixed to prepare a solid electrolyte slurry. The obtained solid electrolyte slurry was applied onto a surface of a stainless steel foil as a support using an applicator, dried, and then punched into a circular shape having a size of 25 mm in diameter to obtain a solid electrolyte layer having a thickness of 40 µm.

### (Production of negative electrode intermediate layer)

Silver nanoparticles and carbon black nanoparticles were weighed so that the mass ratio was 1 : 3, and mixed. Five parts by mass of the obtained mixture was added to and mixed with a binder solution (a solution obtained by dissolving 0.5 parts by mass of styrene-butadiene rubber (SBR) as a binder in mesitylene as a solvent) to prepare a negative electrode intermediate layer slurry. The obtained negative electrode intermediate layer slurry was applied onto a surface of a stainless steel foil as a negative electrode current collector using an applicator, dried, and then punched into a circular shape having a size of 21 mm in diameter to obtain a negative electrode intermediate layer having a thickness of 10 µm.

### (Production of evaluation cell)

The second layer and the first layer produced above were sequentially overlaid on an aluminum foil (circular shape having a diameter of 19 mm) as a positive electrode current collector. Then, the solid electrolyte layer formed on the surface of the stainless steel foil produced above was transferred onto the first layer by cold isostatic pressing (CIP) so that an exposed surface of the solid electrolyte layer faced the first layer. After the stainless steel foil adjacent to the solid electrolyte layer was peeled off, the negative electrode intermediate layer formed on the surface of the stainless steel foil (negative electrode current collector) produced above was overlaid on the transferred solid electrolyte layer so that an exposed surface of the negative electrode intermediate layer faced the solid electrolyte layer, and was pressurized by cold isostatic pressing (CIP) to obtain an evaluation cell (lithium deposition type all-solid-state lithium secondary battery).

### [Example 2]

An evaluation cell of this Example was produced in the same manner as in Example 1 except that styrene-butadiene rubber (SBR) was used as the binder in place of polyvinylidene fluoride (PVDF) in "(2) Production of second layer".

### [Example 3]

An evaluation cell of this Example was produced in the same manner as in Example 2 except that acetylene black (DENKA BLACK (registered trademark) HS-100 manufactured by Denka Company Limited, average primary particle diameter: 36 nm, aspect ratio is less than 10) was used as the conductive aid in place of carbon nanofibers (CNFs) in "(2) Production of second layer".

### [Comparative Example 1]

### (Production of positive electrode active material layer)

As constituent materials of a positive electrode active material layer, an NMC composite oxide (LiNi_{0.8}Mn_{0.1}Co_{0.1}O₂, average particle diameter (D50): 1 µm) as a positive electrode active material, an aldirodite type sulfide solid electrolyte (Li₆PS₅Cl, average particle diameter (D50): 0.2 µm) as a solid electrolyte, acetylene black (DENKA BLACK (registered trademark) HS-100 manufactured by Denka Company Limited, average primary particle diameter: 36 nm, aspect ratio is less than 10) as a conductive aid, and polytetrafluoroethylene (PTFE; capable of being fibrillated) and polyvinylidene fluoride (PVDF) as a binder were prepared. In a glove box in an argon atmosphere with a dew point of -68°C or lower, the positive electrode active material, the solid electrolyte, the conductive aid, and the binder were weighed so that the mass ratio was 79 : 16 : 3 : 2 (the mass ratio of PTFE and PVDF was 1 : 1), and kneaded in an agate mortar. After confirming that PTFE was fibrillated, the obtained mixture was formed into a sheet shape using a hand roller, and then punched into a circular shape having a size of 19 mm in diameter to obtain a positive electrode active material layer having a thickness of 83 µm.

An evaluation cell of this Comparative Example was produced in the same manner as in Example 1 except that the positive electrode active material layer obtained above was used.

### [Comparative Example 2]

An evaluation cell of this Comparative Example was produced in the same manner as in Comparative Example 1 except that only polyvinylidene fluoride (PVDF) was used as the binder without using polytetrafluoroethylene (PTFE); and the positive electrode active material, the solid electrolyte, the conductive aid, and the binder were weighed so that the mass ratio was 79 : 16 : 3 : 2, and kneaded in an agate mortar in the above "(Production of positive electrode active material layer)".

### [Comparative Example 3]

An evaluation cell of this Comparative Example was produced in the same manner as in Comparative Example 1 except that carbon nanofibers (CNFs) (VGCFs (registered trademark) manufactured by Showa Denko K. K., aspect ratio: 60, average fiber diameter: about 150 nm, average fiber length: about 9 µm) were used as the conductive aid in place of acetylene black; only polytetrafluoroethylene (PTFE) was used as the binder without using polyvinylidene fluoride (PVDF); and the positive electrode active material, the solid electrolyte, the conductive aid, and the binder were weighed so that the mass ratio was 79 : 16 : 3 : 2, and kneaded in an agate mortar in the above "(Production of positive electrode active material layer)".

### [Comparative Example 4]

### (Production of positive electrode active material layer)

### (1) Production of first layer

As constituent materials of a first layer, an NMC composite oxide (LiNi_{0.8}Mn_{0.1}Co_{0.1}O₂, average particle diameter (D50): 1 µm) as a positive electrode active material, an aldirodite type sulfide solid electrolyte (Li₆PS₅Cl, average particle diameter (D50): 0.2 µm) as a solid electrolyte, carbon nanofibers (CNFs) (VGCFs (registered trademark) manufactured by Showa Denko K. K., aspect ratio: 60, average fiber diameter: about 150 nm, average fiber length: about 9 µm) as a conductive aid, and polytetrafluoroethylene (PTFE) as a binder capable of being fibrillated were prepared. In a glove box in an argon atmosphere with a dew point of -68°C or lower, the positive electrode active material, the solid electrolyte, the conductive aid, and the binder were weighed so that the mass ratio was 79 : 16 : 3 : 2, and kneaded in an agate mortar. After confirming that the binder was fibrillated, the obtained mixture was formed into a sheet shape using a hand roller, and then punched into a circular shape having a size of 19 mm in diameter to obtain a first layer having a thickness of 80 µm.

### (2) Production of second layer

As constituent materials of a second layer, an NMC composite oxide (LiNi_{0.8}Mn_{0.1}Co_{0.1}O₂, average particle diameter (D50): 1 µm) as a positive electrode active material, an aldirodite type sulfide solid electrolyte (Li₆PS₅Cl, average particle diameter (D50): 0.2 µm) as a solid electrolyte, carbon nanofibers (CNFs) (VGCFs (registered trademark) manufactured by Showa Denko K. K., aspect ratio: 60, average fiber diameter: about 150 nm, average fiber length: about 9 µm) as a conductive aid, and polyvinylidene fluoride (PVDF) as a binder were prepared. In a glove box in an argon atmosphere with a dew point of -68°C or lower, the positive electrode active material, the solid electrolyte, the conductive aid, and the binder were weighed so that the mass ratio was 79 : 16 : 3 : 2, and kneaded in an agate mortar. The obtained mixture was formed into a sheet shape using a hand roller, and then punched into a circular shape having a size of 19 mm in diameter to obtain a second layer having a thickness of 3 µm.

An evaluation cell of this Comparative Example was produced in the same manner as in Example 1 except that the positive electrode active material layer obtained above was used.

### [Comparative Example 5]

An evaluation cell of this Comparative Example was produced in the same manner as in Comparative Example 1 except that carbon nanofibers (CNFs) (VGCFs (registered trademark) manufactured by Showa Denko K. K., aspect ratio: 60, average fiber diameter: about 150 nm, average fiber length: about 9 µm) was used as the conductive aid in place of acetylene black in the above "Production of positive electrode active material layer".

### [Comparative Example 6]

An evaluation cell of this Comparative Example was produced in the same manner as in Example 1 except that the positive electrode active material was not used as the constituent material of the second layer in "(2) Production of second layer".

### <Observation of binder shape>

The positive electrode active material layer was taken out from the evaluation cell produced above, and a cross section of the first layer was observed with a scanning electron microscope (SEM). For each binder in the SEM image, the maximum Feret diameter and the minimum Feret diameter were determined. In addition, the aspect ratio was calculated by dividing the maximum Feret diameter by the minimum Feret diameter. Then, whether each binder was a fibrous binder or a non-fibrous binder was determined by confirming whether or not a ratio of an area of a fiber portion in which an aspect ratio was 10 or more and a minimum Feret diameter was 0.2 µm or less to a total area of each binder was more than 50%. This operation was performed on a SEM image of 10 visual fields (each visual field contained 10 or more binders), and a ratio of an area of the fibrous binder to an area of the binder in the observation image was calculated as a percentage. The results are shown in Table 1 below.

### <Evaluation of rapid charging characteristics>

A positive electrode lead and a negative electrode lead were connected to each of the positive electrode current collector and the negative electrode current collector of the evaluation cell produced above, and three cycles of charge and discharge was performed according to the following charge-discharge test conditions. At this time, the following charge-discharge test was performed while applying a restraint pressure of 3 MPa in a laminating direction of the evaluation cell using a pressure member.

### (Charge-discharge test conditions)

### 1) Charge-discharge conditions

[Voltage range] 3.0 to 4.3 V
[Charging process] CCCV (0.01 C cut-off)
[Discharging process] CC
[Charge-discharge rate] 0.1 C or 2 C

### (Stop for 30 minutes each after charge and discharge)

### 2) Evaluation temperature: 298 K (25°C).

The evaluation cell was charged from 3.0 V to 4.3 V (0.01 C cut-off) at the above charge-discharge rate in a constant current/constant voltage (CCCV) mode in a charging process (lithium metal is deposited on the negative electrode current collector) in a thermostatic bath set at the above evaluation temperature using a charge-discharge tester. Thereafter, in a discharging process (lithium metal on the negative electrode current collector is dissolved), a constant current (CC) mode was set, and the evaluation cell was discharged from 4.3 V to 3.0 V at the above charge-discharge rate. Here, 1 C is a current value at which the battery is fully charged (100% charged) when charged at the current value for 1 hour. A charge-discharge treatment at 0.1 C or 2 C was performed for three cycles. Then, a ratio of the charge capacity (2 C) at the third cycle to the charge capacity (0.1 C) at the third cycle was calculated to evaluate rapid charging characteristics. The results are shown in Table 1 below.

### [Table 1]

**Table 1**

| | Positive electrode active material layer | | | | | | | | Rapid charging characteristics [2 C/0.1 C] |
|---|---|---|---|---|---|---|---|---|---|
| | Configuration | | Thickness (µm) | Content of positive electrode active material (% by mass) | Content of solid electrolyte (%by mass) | Type of conductive aid | Type of binder | Area ratio of fibrous binder (%) | |
| Example 1 | Two layers | First layer | 80 | 79 | 16 | CNF | PTFE | 100 | 0.88 |
| | | Second layer | 3 | 79 | 0 | CNF | PVDF | 0 | |
| Example 2 | Two layers | First layer | 80 | 79 | 16 | CNF | PTFE | 100 | 0.86 |
| | | Second layer | 3 | 79 | 0 | CNF | SBR | 0 | |
| Example 3 | Two layers | First layer | 80 | 79 | 16 | CNF | PTFE | 100 | 0.83 |
| | | Second layer | 3 | 79 | 0 | AB | SBR | 0 | |
| Comparative Example 1 | One layer | | 83 | 79 | 16 | AB | PTFE + PVDF | 50 | 0.71 |
| Comparative Example 2 | One layer | | 83 | 79 | 16 | AB | PVDF | 0 | 0.62 |
| Comparative Example 3 | One layer | | 83 | 79 | 16 | CNF | PTFE | 100 | 0.79 |
| Comparative Example 4 | Two layers | First layer | 80 | 79 | 16 | CNF | PTFE | 100 | 0.81 |
| | | Second layer | 3 | 79 | 16 | CNF | PVDF | 0 | |
| Comparative Example 5 | One layer | | 83 | 79 | 16 | CNF | PTFE + PVDF | 50 | 0.80 |
| Comparative Example 6 | Two layers | First layer | 80 | 79 | 16 | CNF | PTFE | 100 | 0.80 |
| | | Second layer | 3 | 0 | 0 | CNF | PVDF | 0 | |

From the results shown in Table 1, it is found that the rapid charging characteristics can be improved according to the present invention. The reason why the rapid charging characteristics of Comparative Example 4 are low is considered to be that in the case of a large content of the solid electrolyte in the second layer, when the potential of the positive electrode current collector during charge increases, the solid electrolyte being in contact with the positive electrode current collector in the second layer deteriorates due to oxidation, and the internal resistance of the battery increases. In addition, the reason why the rapid charging characteristics of Comparative Example 6 are low is considered to be that when the positive electrode active material is not present in the second layer, the potential of the second layer increases during charge, the solid electrolyte being in contact with the second layer in the first layer deteriorates due to oxidation, and the internal resistance of the battery increases.

Comparison between Example 2 and Example 3 showed that when the first layer and the second layer both contain fibrous carbon as a conductive aid, the rapid charging characteristics are further improved. In addition, comparison between Example 1 and Example 2 showed that when the first layer contains polytetrafluoroethylene as a fibrous binder and the second layer contains polyvinylidene fluoride as a non-fibrous binder, the rapid charging characteristics are further improved.

### Reference Signs List

- 10a, 100: Laminate type battery
- 11': Negative electrode current collector
- 11": Positive electrode current collector
- 13: Negative electrode active material layer
- 14: Positive electrode
- 15: Positive electrode active material layer
- 15a: First layer
- 15b: Second layer
- 17: Solid electrolyte layer
- 19: Single battery layer
- 21: Power generating element
- 25: Negative electrode current collecting plate
- 27: Positive electrode current collecting plate
- 29: Laminate film
- 30: Fibrous binder

## Claims

1. A secondary battery comprising a power generating element including:
a positive electrode including a positive electrode active material layer disposed on a surface of a positive electrode current collector;
a negative electrode; and
a solid electrolyte layer containing a solid electrolyte and intervening the positive electrode and the negative electrode, wherein
the positive electrode active material layer is formed by laminating a first layer being in contact with the solid electrolyte layer and containing a positive electrode active material, a solid electrolyte, and a binder, and a second layer being in contact with the positive electrode current collector and containing a positive electrode active material and a binder,
a content of the solid electrolyte in the first layer is 1% by mass or more with respect to 100% by mass of a total solid content contained in the first layer, and
a content of the solid electrolyte in the second layer is 0% by mass, or is more than 0% by mass and less than 1% by mass, with respect to 100% by mass of a total solid content contained in the second layer.

2. The secondary battery according to claim 1, wherein
in the first layer, the binder includes a fibrous binder, and
an area ratio of the fibrous binder to a total area of the binder in an observation image when a cross section of the first layer is observed using a scanning electron microscope is more than 50%.

3. The secondary battery according to claim 2, wherein the fibrous binder includes at least one selected from the group consisting of polytetrafluoroethylene, carboxymethyl cellulose, polyethylene oxide, polyvinyl alcohol, and polyethylene.

4. The secondary battery according to claim 2 or 3, wherein
in the second layer, the binder includes a non-fibrous binder, and
an area ratio of the non-fibrous binder to a total area of the binder in an observation image when a cross section of the second layer is observed using a scanning electron microscope is more than 50%.

5. The secondary battery according to claim 4, wherein the non-fibrous binder includes at least one selected from the group consisting of styrene-butadiene rubber, polyvinylidene fluoride, ethyl cellulose, and an acrylic resin.

6. The secondary battery according to claim 1 or 2, wherein at least one of the first layer and the second layer further contains a conductive aid made of fibrous carbon.

7. The secondary battery according to claim 4, wherein both the first layer and the second layer further contain a conductive aid made of fibrous carbon, the fibrous binder includes polytetrafluoroethylene, and the non-fibrous binder includes polyvinylidene fluoride.

8. The secondary battery according to claim 1 or 2, wherein a content of the positive electrode active material in the second layer is more than 50% by mass with respect to 100% by mass of a total solid content contained in the second layer.

9. The secondary battery according to claim 1 or 2, wherein a thickness of the second layer is 0.1 µm or more and less than 5 µm.

10. The secondary battery according to claim 1 or 2, wherein a thickness of the first layer is 50 µm or more and 120 µm or less.

## Patentansprüche

1. Sekundärbatterie, umfassend ein stromerzeugendes Element, das Folgendes beinhaltet:
eine positive Elektrode, die eine auf einer Oberfläche eines Stromkollektors der positiven Elektrode angeordnete Positivelektroden-Aktivmaterialschicht aufweist;
eine negative Elektrode; und
eine Festelektrolytschicht, die einen Festelektrolyten enthält und zwischen der positiven Elektrode und der negativen Elektrode angeordnet ist, wobei
die Positivelektroden-Aktivmaterialschicht gebildet wird, indem eine erste Schicht, die in Kontakt mit der Festelektrolytschicht steht und ein Positivelektroden-Aktivmaterial, einen Festelektrolyten sowie ein Bindemittel enthält, und eine zweiten Schicht, die in Kontakt mit dem Stromkollektor der positiven Elektrode steht und ein Positivelektroden-Aktivmaterial sowie ein Bindemittel enthält, laminiert werden,
der Gehalt an Festelektrolyt in der ersten Schicht 1 Massenprozent oder mehr, bezogen auf 100 Massenprozent des in der ersten Schicht enthaltenen Gesamtfeststoffgehalts, beträgt, und
der Gehalt an Festelektrolyt in der zweiten Schicht 0 Massenprozent oder mehr als 0 Massenprozent und weniger als 1 Massenprozent, bezogen auf 100 Massenprozent des in der zweiten Schicht enthaltenen Gesamtfeststoffgehalts, beträgt.

2. Sekundärbatterie nach Anspruch 1, wobei
in der ersten Schicht das Bindemittel ein faserförmiges Bindemittel umfasst, und
das Flächenverhältnis des faserförmigen Bindemittels zur Gesamtfläche des Bindemittels in einem Beobachtungsbild, wenn ein Querschnitt der ersten Schicht mittels eines Rasterelektronenmikroskops betrachtet wird, mehr als 50 % beträgt.

3. Sekundärbatterie nach Anspruch 2, wobei das faserförmige Bindemittel mindestens eines umfasst, das aus der Gruppe bestehend aus Polytetrafluorethylen, Carboxymethylcellulose, Polyethylenoxid, Polyvinylalkohol und Polyethylen ausgewählt ist.

4. Sekundärbatterie nach Anspruch 2 oder 3, wobei
in der zweiten Schicht das Bindemittel ein nicht-faserförmiges Bindemittel umfasst, und
das Flächenverhältnis des nicht-faserförmigen Bindemittels zur Gesamtfläche des Bindemittels in einem Beobachtungsbild, wenn ein Querschnitt der zweiten Schicht mittels eines Rasterelektronenmikroskops betrachtet wird, mehr als 50 % beträgt.

5. Sekundärbatterie nach Anspruch 4, wobei das nicht-faserförmige Bindemittel mindestens eines aus der Gruppe bestehend aus Styrol-Butadien-Kautschuk, Polyvinylidenfluorid, Ethylcellulose und einem Acrylharz umfasst.

6. Sekundärbatterie nach Anspruch 1 oder 2, wobei mindestens eine der ersten Schicht und der zweiten Schicht ferner ein Leitfähigkeitsadditiv aus faserförmigem Kohlenstoff enthält.

7. Sekundärbatterie nach Anspruch 4, wobei sowohl die erste Schicht als auch die zweite Schicht ferner ein Leitfähigkeitsadditiv aus faserförmigem Kohlenstoff enthalten, das faserförmige Bindemittel Polytetrafluorethylen umfasst und das nicht-faserförmige Bindemittel Polyvinylidenfluorid umfasst.

8. Sekundärbatterie nach Anspruch 1 oder 2, wobei der Gehalt an Positivelektroden-Aktivmaterial in der zweiten Schicht mehr als 50 Massenprozent, bezogen auf 100 Massenprozent des in der zweiten Schicht enthaltenen Gesamtfeststoffgehalts, beträgt.

9. Sekundärbatterie nach Anspruch 1 oder 2, wobei die Dicke der zweiten Schicht 0,1 µm oder mehr und weniger als 5 µm beträgt.

10. Sekundärbatterie nach Anspruch 1 oder 2, wobei die Dicke der ersten Schicht 50 µm oder mehr und 120 µm oder weniger beträgt.

## Revendications

1. Batterie auxiliaire comprenant un élément de génération de puissance incluant :
une électrode positive incluant une couche de matériau actif d'électrode positive disposée sur une surface d'un collecteur de courant d'électrode positive ;
une électrode négative ; et
une couche d'électrolyte solide contenant un électrolyte solide et intervenant entre l'électrode positive et l'électrode négative, dans laquelle
la couche de matériau actif d'électrode positive est constituée par
un laminage d'une première couche en contact avec la couche d'électrolyte solide et contenant un matériau actif d'électrode positive, un électrolyte solide et un liant, et une deuxième couche en contact avec le collecteur de courant d'électrode positive et contenant un matériau actif d'électrode positive et un liant,
une teneur en l'électrolyte solide dans la première couche est de 1 % en masse ou plus par rapport à 100 % en masse d'une teneur solide totale contenue dans la première couche, et
une teneur en l'électrolyte solide dans la deuxième couche est de 0 % en masse, ou est supérieure à 0 % en masse et inférieure à 1 % en masse, par rapport à 100 % en masse d'une teneur solide totale contenue dans la deuxième couche.

2. La batterie auxiliaire selon la revendication 1, dans laquelle
dans la première couche, le liant inclut un liant fibreux, et
un rapport de surface du liant fibreux à une surface totale du liant dans une image d'observation, lorsqu'une section transversale de la première couche est observée au moyen d'un microscope électronique à balayage, est supérieur à 50 %.

3. La batterie auxiliaire selon la revendication 2, dans laquelle le liant fibreux inclut au moins un sélectionné dans le groupe consistant en polytétrafluoroéthylène, cellulose carboxyméthylique, oxyde de polyéthylène, alcool de polyvinyle et polyéthylène.

4. La batterie auxiliaire selon la revendication 2 ou 3, dans laquelle
dans la deuxième couche, le liant inclut un liant non fibreux, et
un rapport de surface du liant non fibreux à une surface totale du liant dans une image d'observation, lorsqu'une section transversale de la deuxième couche est observée au moyen d'un microscope électronique à balayage, est supérieur à 50 %.

5. La batterie auxiliaire selon la revendication 4, dans laquelle le liant non fibreux inclut au moins un sélectionné dans le groupe consistant en caoutchouc styrène- butadiène, fluorure de polyvinylidène, éthylcellulose et en une résine acrylique.

6. La batterie auxiliaire selon la revendication 1 ou 2, dans laquelle au moins une de la première couche et de la deuxième couche contient en outre une aide conductrice faite en fibre de carbone.

7. La batterie auxiliaire selon la revendication 4, dans laquelle la première couche et la deuxième couche contiennent toutes deux en outre une aide conductrice faite en fibre de carbone, le liant fibreux inclut du polytétrafluoroéthylène, et le liant non fibreux inclut du fluorure de polyvinylidène.

8. La batterie auxiliaire selon la revendication 1 ou 2, dans laquelle une teneur en matériau actif d'électrode positive dans la deuxième couche est supérieure à 50 % en masse par rapport à 100 % en masse d'une teneur solide totale contenue dans la deuxième couche.

9. La batterie auxiliaire selon la revendication 1 ou 2, dans laquelle une épaisseur de la deuxième couche est de 0,1 µm ou plus et moins de 5 µm.

10. La batterie auxiliaire selon la revendication 1 ou 2, dans laquelle une épaisseur de la première couche est de 50 µm ou plus et 120 µm ou moins.
